# EUROPEAN PATENT SPECIFICATION

(11) **EP 4 471 261 B1**
(45) Date of publication and mention of the grant of the patent: **16.09.2026**
(21) Application number: 24163631.5
(22) Date of filing: 23.05.2023
(51) Int. Cl.: F02C 3/22, F02C 7/224, F02C 6/00

(54) **HYDROGEN FUEL SYSTEM ARCHITECTURE WITH OXYGEN SEPARATION AND SUPERHEATING**
WASSERSTOFFBRENNSTOFFSYSTEMARCHITEKTUR MIT SAUERSTOFFTRENNUNG UND ÜBERHITZUNG
ARCHITECTURE DE SYSTÈME DE CARBURANT À HYDROGÈNE AVEC SÉPARATION D'OXYGÈNE ET SURCHAUFFE

(43) Date of publication of application: 04.12.2024
(62) Document number(s) of the earlier application(s) in accordance with Art. 76 EPC: 23461595.3 / 4 467 789
(73) Proprietor: Hamilton Sundstrand Corporation, Charlotte, NC 28217-4578 (US)
(72) Inventor: KRUCZEK, Grzegorz, 51-317 Wroclaw (PL); RIDOUANE, El Hassan, Cork City (IE); CAO, Changmin, Cork City (IE)
(74) Representative: Dehns

(56) References cited:
- JP-A- H0 450 435
- KR-A- 20200 033 434
- KR-B1- 102 119 273
- US-A- 3 237 400
- US-A1- 2004 149 503
- US-A1- 2023 271 045
- US-B1- 11 603 798

## Description

### FIELD

The subject-matter disclosed herein relates to hydrogen fuel systems, and in particular to hybrid fuel cell gas turbine systems.

### BACKGROUND

There is an increasing pressure on the aerospace industry to switch the primary fuel for aircraft from hydrocarbons to more sustainable energy sources such as hydrogen. Hybrid fuel cell gas turbine systems, for example, comprise low-temperature fuel cells (e.g. proton exchange membrane fuel cells (PEMFCs)) that can increase fuel-to-electricity conversion efficiency and lower emissions of greenhouse gases. However, it is desirable to further increase efficiency and reduce emissions of these systems. The examples disclosed herein relate to such hydrogen fuel systems.

US 3237400 A discloses a powerplant having a combustion chamber, a turbine, an exhaust nozzle, and a heat exchange coil surrounding the exhaust nozzle, wherein the heat exchange coil is configured to gasify a stream of liquid hydrogen.

JP H0450435 A discloses an air turbo ram jet wherein liquid hydrogen or hydrogen gas heat exchanges with combustion gas and flows out to be supplied to a turbine, wherein air compressed by a compressor and high-temperature and high-pressure hydrogen gas discharged from the turbine are mixed and burned in a combustion chamber.

US 11603798 B1 discloses aircraft engines including a burner section and a turbine section arranged along a shaft. A cryogenic fuel source is configured to supply fuel to the burner section and the fuel within the fuel line is configured to pick up heat from the exhaust from the burner section.

### SUMMARY

According to a first aspect, there is provided a system as claimed in claim 1.

In the following, it should be understood that where the system is 'configured to direct' streams of fluids, the system comprises suitable conduits fluidly connected in such a manner as to facilitate the described path of the fluid stream.

The combustion chamber is configured to combust the stream of superheated/gaseous hydrogen and the stream of superheated/gaseous oxygen. The temperature of the combustion of the streams of superheated/gaseous hydrogen and superheated/gaseous oxygen may be between 3000K to 4000K. The temperature of flue gases (produced by the combustion chamber) after leaving the turbine may be in the range of 500K to 2000K.

The term 'superheated' may be understood to mean that the fluid is at a temperature higher than its vaporisation point at absolute pressure. For example, a temperature of the stream of superheated hydrogen may be in the range 293K to 2000K, preferably between 400K to 500K (e.g. where the temperature of hydrogen should not exceed temperature of 500K in order to mitigate it escaping from the conduits/pipes of the system). A temperature of the stream of superheated oxygen may be in the range 293K to 2000K, preferably between 600K to 800K.

The system may comprise a source of liquid hydrogen (e.g. a tank).

The second heat exchanger may be configured to receive a second stream of compressed air and configured to transfer heat from the second stream of compressed air to the stream of liquid oxygen to yield the stream of gaseous oxygen.

The system may comprise a compressor configured to generate the first stream of compressed air and the second stream of compressed air.

The third heat exchanger is configured to receive the stream of gaseous hydrogen; and the system may comprise a fourth heat exchanger configured to receive a stream of flue gas from the turbine and the stream of gaseous oxygen, wherein the fourth heat exchanger is configured to transfer heat between the flue gas and the stream of gaseous oxygen to superheat the stream of oxygen; wherein the third heat exchanger and the fourth heat exchanger are arranged to receive the streams of flue gas from the turbine in series or in parallel; and wherein the system is configured to direct the stream of superheated oxygen and the stream of superheated hydrogen to the combustion chamber.

In other words, the system may comprise a single heat exchanger (a third heat exchanger) configured to transfer heat between a stream of flue gas and both a stream of gaseous hydrogen and a stream of gaseous oxygen in order to superheat the stream of hydrogen and the stream of oxygen; however, alternatively, the system may comprise one heat exchanger (a third heat exchanger) configured to transfer heat between a stream of flue gas and (a single) one of the streams of gaseous hydrogen and gaseous oxygen in order to superheat the stream of hydrogen or the stream of oxygen and another heat exchanger (a fourth heat exchanger) configured to transfer heat between a stream of flue gas and the other one of the streams of gaseous hydrogen and gaseous oxygen in order to superheat the stream of hydrogen or the stream of oxygen.

The system may comprise a fuel cell, and the system may be configured to: direct a first portion of the stream of gaseous hydrogen to the combustion chamber; and direct a second portion of the stream of gaseous hydrogen to the fuel cell. The second portion of the stream of gaseous hydrogen may be directed to the fuel cell via the second heat exchanger.

The system may be configured to direct the second stream of compressed air from the second heat exchanger to the fuel cell. Alternatively, the system may be configured to direct a stream of (optionally compressed) ambient air or bleed air to the fuel cell.

The system may be a hydrogen fuel system. The system may be a hybrid fuel cell gas turbine system comprising a fuel cell and a gas turbine. The system may be for providing propulsion to a vehicle, such as an aircraft.

The system may be configured to direct a stream of residual hydrogen from the fuel cell to the combustion chamber. However, the system may be configured to direct a stream of residual hydrogen from the fuel cell to the third heat exchanger (before it is passed to the combustion chamber) to superheat the stream of residual hydrogen. The system may be configured to then direct the stream of superheated residual hydrogen to the combustion chamber.

Alternatively, the system may comprise a fifth heat exchanger configured to receive a stream of flue gas from the turbine and the stream of residual hydrogen from the fuel cell, wherein the fifth heat exchanger is configured to transfer heat between the stream of flue gas and the stream of residual hydrogen to superheat the stream of residual hydrogen. The third heat exchanger, the fourth heat exchanger and the fifth heat exchanger may be arranged to receive the streams of flue gas from the turbine in series or in parallel. The system may be configured to direct the stream of superheated residual hydrogen to the combustion chamber.

In other words, the system may be configured to direct the stream of residual hydrogen from the fuel cell to the third heat exchanger to be superheated along with the first portion of the stream of gaseous hydrogen and/or the stream of gaseous oxygen; however, alternatively, the stream of residual hydrogen may be directed to a dedicated additional (fifth) heat exchanger configured to superheat the stream of residual hydrogen.

The system may be configured to direct a stream of outlet air from the fuel cell to a turbine of the gas turbine.

The system may comprise a coolant circuit configured to absorb heat from (components of) the gas turbine and/or the fuel cell. For example, the coolant circuit may be configured to control the temperature of (e.g. cool) at least one of the fuel cell, an electric motor configured to provide power to the turbine, the turbine, the combustion chamber, and the compressor, as well as any other heat sources from other systems in the vehicle (e.g. aircraft). The coolant circuit may comprise an ambient heat exchanger configured to transfer heat from the coolant circuit to the ambient atmosphere. The coolant circuit may be a closed loop.

The coolant circuit may comprise the second heat exchanger. The second heat exchanger may be configured to transfer heat between the coolant circuit and at least one of the streams in the second heat exchanger (to thereby, for example, control the temperature of (e.g. heat) the streams in second heat exchanger).

The system may comprise a water recovery heat exchanger configured to receive a stream of flue gas from the turbine and a stream of ambient air, wherein the water recovery heat exchanger is configured to transfer heat from the stream of flue gas to the stream of ambient air to yield a stream of water. The water recovery heat exchanger may be arranged to receive the stream of flue gas from the turbine via other heat exchangers of the system. For example, the water recovery heat exchanger may be arranged to receive the stream of flue gas (directly) from at least one of the third heat exchanger, the fourth heat exchanger and the fifth heat exchanger. The system may be configured to direct the stream of water to a cooling system for the combustion chamber and/or the turbine. For example, a cooling system of the turbine may utilise the (liquid) water by injecting the water through inner channels of the turbine blades. In another example, a cooling system of the combustion chamber may utilise the water by injecting the water into the combustion chamber to lower the flame temperature.

The first heat exchanger may be configured to transfer heat between the first stream of compressed air and the stream of liquid hydrogen to yield a stream of liquid oxygen, a stream of gaseous hydrogen, and a stream of nitrogen.

The system may be configured to direct the stream of nitrogen to the second heat exchanger, wherein the second heat exchanger is configured to transfer heat between the stream of nitrogen and at least one of the streams in the second heat exchanger.

The system may be configured to direct the stream of nitrogen to a fire suppression system. For example, the stream of nitrogen may be used as a fire suppression agent (e.g. to put out fires) or a fire prevention agent (e.g. to cool down components at risk of catching fire).

The system may be configured to direct the stream of nitrogen to the source of liquid hydrogen (e.g. a tank) for temperature control (e.g. cooling) of the source of liquid hydrogen. The system may be configured to direct the stream of gaseous nitrogen to vehicle electronics for temperature control (e.g. cooling) of the vehicle electronics. In other words, the vehicle comprising the hydrogen fuel system may utilise the stream of gaseous nitrogen to cool its electronic components and/or superconducting electronic components.

The system may be configured to direct the stream of gaseous nitrogen to turbine blades of (a turbine of) the gas turbine for temperature control (e.g. cooling) of the turbine blades.

In one example, the system may be configured to direct the stream of nitrogen to the source of liquid hydrogen for temperature control of the source of liquid hydrogen, from the source of liquid hydrogen to the second heat exchanger, wherein the second heat exchanger is configured to transfer heat between the stream of nitrogen and at least one of the streams in the second heat exchanger, and from the second heat exchanger to the fire suppression system.

According to a second aspect, there is provided a method as claimed in claim 6.

The method comprises combusting, using the combustion chamber, the stream of superheated hydrogen and the stream of gaseous oxygen.

The method may comprise directing the stream of liquid hydrogen to the first heat exchanger from a source of liquid hydrogen (e.g. a tank).

The method may comprise directing a second stream of compressed air to the second heat exchanger; and transferring heat, using the second heat exchanger, from the second stream of compressed air to the stream of liquid oxygen to yield the stream of gaseous oxygen. The method may comprise generating, using a compressor, the first stream of compressed air and the second stream of compressed air. For example, the compressor may be used to generate a preliminary stream of compressed air that is split into the first stream and the second stream.

The method may comprise directing a stream of flue gas from the turbine of the gas turbine and the stream of gaseous hydrogen to the third heat exchanger; directing a stream of flue gas from the turbine of the gas turbine and the stream of gaseous oxygen to a fourth heat exchanger; wherein the third heat exchanger and the fourth heat exchanger are arranged to receive the streams of flue gas from the turbine in series or in parallel; transferring heat, using the third heat exchanger, between the stream of flue gas and the stream of gaseous hydrogen to superheat the stream of hydrogen; transferring heat, using the fourth heat exchanger, between the stream of flue gas and the stream of gaseous oxygen to superheat the stream of oxygen; and directing the stream of superheated oxygen and the stream of superheated hydrogen to a combustion chamber of the gas turbine.

The method may comprise directing a first portion of the stream of gaseous hydrogen from the first heat exchanger to the third heat exchanger or the combustion chamber; and directing a second portion of the stream of gaseous hydrogen from the first heat exchanger to a fuel cell, preferably via the second heat exchanger.

The method may comprise directing the second stream of compressed air from the second heat exchanger to the fuel cell. Alternatively, the system may be configured to direct a stream of (optionally compressed) ambient air or bleed air to the fuel cell.

The method may comprise directing a stream of residual hydrogen from the fuel cell to the combustion chamber.

Alternatively, the method may comprise directing a stream of residual hydrogen from the fuel cell to the third heat exchanger; transferring heat, using the third heat exchanger, between the stream of flue gas and the stream of residual hydrogen to superheat the stream of residual hydrogen; and directing the stream of superheated residual hydrogen to the combustion chamber.

Alternatively, the method may comprise directing a stream of flue gas from the turbine and the stream of residual hydrogen from the fuel cell to a fifth heat exchanger; wherein the third heat exchanger, the fourth heat exchanger and the fifth heat exchanger are arranged to receive the streams of flue gas from the turbine in series or in parallel; transferring heat, using the fifth heat exchanger, between the stream of flue gas and the stream of residual hydrogen to superheat the stream of residual hydrogen; and directing the stream of superheated residual hydrogen to the combustion chamber.

In other words, the stream of residual hydrogen can be directed from the fuel cell directly to the combustion chamber; or it can be directed from the fuel cell to the third heat exchanger to be superheated along with the first portion of the stream of gaseous hydrogen and/or the stream of gaseous oxygen; or it can be directed from the fuel cell to an additional (fifth) heat exchanger configured to superheat the stream of residual hydrogen.

The method may comprise directing a stream of outlet air from the fuel cell to a turbine of the gas turbine.

The method may comprise providing a coolant circuit configured to absorb heat from the gas turbine and/or the fuel cell, wherein the coolant circuit comprises the second heat exchanger; and transferring heat, using the second exchanger, between the coolant circuit and at least one of the streams in the second heat exchanger.

The method may comprise directing a stream of flue gas from the turbine and a stream of ambient air to a water recovery heat exchanger, and transferring heat, using the water recovery heat exchanger, from the stream of flue gas to the stream of ambient air to yield a stream of water. The water recovery heat exchanger may be arranged to receive the stream of flue gas from the turbine via other heat exchangers of the system. For example, the water recovery heat exchanger may be arranged to receive the stream of flue gas (directly) from at least one of the third heat exchanger, the fourth heat exchanger and the fifth heat exchanger. The method may comprise directing the stream of water to a cooling system for the combustion chamber and/or the turbine. For example, a cooling system of the turbine may utilise the (liquid) water by injecting the water through inner channels of the turbine blades. In another example, a cooling system of the combustion chamber may utilise the water by injecting the water into the combustion chamber to lower the flame temperature.

The method may comprise transferring heat, using the first heat exchanger, between the first stream of compressed air and the stream of liquid hydrogen to yield a stream of liquid oxygen, a stream of gaseous hydrogen, and a stream of nitrogen.

The method may comprise directing the stream of nitrogen to the second heat exchanger; and transferring heat, using the second exchanger, between the stream of nitrogen and at least one of the streams in the second heat exchanger.

The method may comprise directing the stream of nitrogen to a fire suppression system. For example, the stream of nitrogen may be used as a fire suppression agent (e.g. to put out fires) or a fire prevention agent (e.g. to cool down components at risk of catching fire).

The method may comprise directing the stream of nitrogen to the source of liquid hydrogen (e.g. a tank) for temperature control (e.g. cooling) of the source of liquid hydrogen.

The method may comprise directing the stream of gaseous nitrogen to vehicle electronics for temperature control (e.g. cooling) of the vehicle electronics. In other words, the method may comprise directing the stream of gaseous nitrogen to (superconducting) electronic components of the vehicle (e.g. aircraft) comprising the hydrogen fuel system.

The method may comprise directing the stream of gaseous nitrogen to turbine blades of (a turbine of) the gas turbine for temperature control (e.g. cooling) of the turbine blades.

In one example, the method may comprise: directing the stream of nitrogen to the source of liquid hydrogen for temperature control of the source of liquid hydrogen; directing the stream of nitrogen from the source of liquid hydrogen to the second heat exchanger, wherein the second heat exchanger is configured to transfer heat between the stream of nitrogen and at least one of the streams in the second heat exchanger; and directing the stream of nitrogen from the second heat exchanger to the fire suppression system.

### BRIEF DESCRIPTION OF THE DRAWINGS

Figure 1 shows a first example of a hydrogen fuel system architecture.
Figure 2 shows a second example of a hydrogen fuel system architecture not forming part of the claimed invention.
Figure 3 shows a third example of a hydrogen fuel system architecture.

### DETAILED DESCRIPTION

There is an increasing pressure on the aerospace industry to switch the primary fuel used for aircraft from hydrocarbons to more sustainable energy sources such as hydrogen. This, however, brings many challenges. The systems described herein aim to take advantage of the new technologies of cryogenic compressed hydrogen and liquid hydrogen storage. In particular, the new systems described herein utilise the chill that is associated with cryogenic fluid.

The new systems described herein envision a way to use liquid H₂ onboard an aircraft as an additional heat sink to separate oxygen and nitrogen from part of the air. More specifically the systems use a new architecture of hybrid gas turbine and fuel cell operation with an oxygen and nitrogen separation process.

In order to reach a manageable H₂ volume, it must either be highly compressed and cooled (between 300-850 bar and <78K) or cryogenically cooled to liquid state (~-253°C = ~20K). The use of liquid hydrogen (LH) is more promising in terms of weight and volume when compared to compressed hydrogen (CH) and represents the only way to enable hydrogen-based short and medium range and bigger type of aircrafts.

The low storage temperature of liquid hydrogen fuel allows it to be used to cool air to condense oxygen and effectively separate it from nitrogen. Advantageously, the separated oxygen can be combusted with hydrogen in oxy-fuel combustion at very high temperatures which increases the efficiency of gas turbine. The absence of nitrogen in the combustion chamber avoids the generation of harmful emissions. Furthermore, the separated nitrogen can be used as a cooling medium (e.g. for cooling one or more of a tank of liquid hydrogen fuel, electronics, superconducting electronics, turbine blades, etc), as a fire suppression agent, and/or as a neutral gas for fire protection.

Thus, the described configurations allow for the use of high efficiency oxy-fuel combustion and additionally the production of nitrogen which can be used as a fire suppressant or fire protection gas. Part of the hydrogen that was used to condense oxygen is combusted in a combustion chamber along with oxygen and the rest, along with a second portion of air, may optionally also be used in fuel cell for a hybrid fuel cell gas turbine configuration.

The separation process of the new systems described herein are possible due to the fact that the oxygen boiling point is at 90.2K which is significantly higher than temperature of liquid hydrogen (~20K). Moreover, the nitrogen boiling point is at 77.4K which gives a range of temperatures where liquid oxygen and gaseous nitrogen exist (77.4K to 90.2K).

For improved functioning of the hydrogen-engine, or improved functioning of a fuel cell, the hydrogen fuel needs to reach higher temperatures (> 0°C = 273K). The described configurations provide a means to increase the hydrogen temperature, whilst simultaneously producing high purity oxygen (e.g. comprising at least 95 mol.% oxygen) for oxy-fuel combustion.

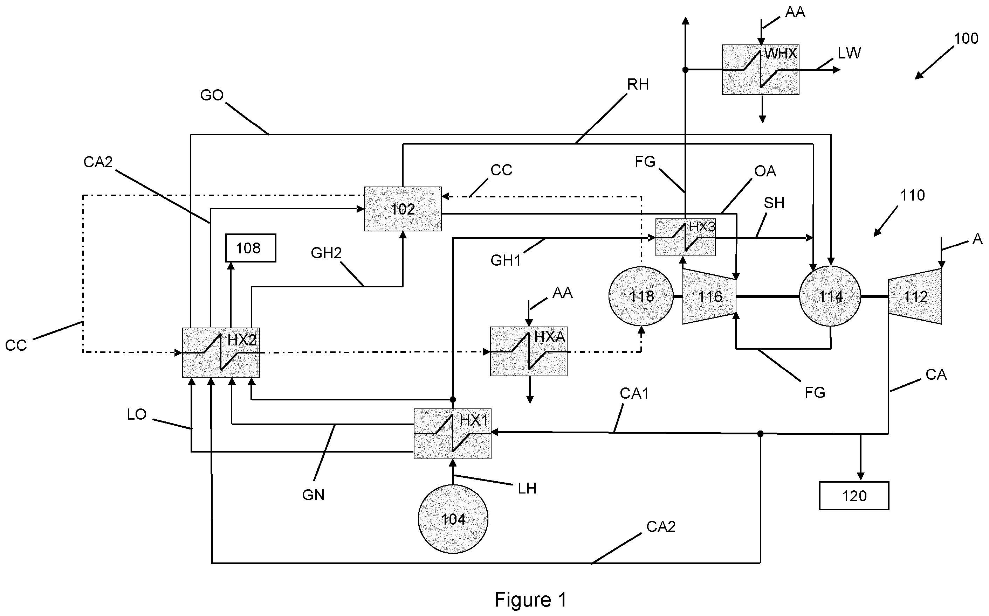

An architecture for a hydrogen fuel system 100 is shown in Figure 1. The hydrogen fuel system 100 shown in Figure 1 is a hybrid fuel cell gas turbine system comprising a fuel cell 102 and a gas turbine engine 110. In the example shown in Figure 1, the hydrogen fuel system 100 is arranged in an aircraft (not shown) to provide electricity and propulsion to the aircraft.

As shown in Figure 1, the hydrogen fuel system 100 comprises a tank 104 as a source of liquid hydrogen LH. As also shown in Figure 1, the hydrogen fuel system 100 comprises a compressor 112 configured to compress air A, such as ambient air or bleed air, to provide a stream of compressed air CA.

The hydrogen fuel system 100 comprises at least a first (oxygen condensing) heat exchanger HX1, a second (oxygen heating/evaporating) heat exchanger HX2, and a third (superheating) heat exchanger HX3.

The first heat exchanger HX1 is configured to receive a first stream of compressed air CA1 (a first portion of the stream of compressed air CA from the compressor 112) and a stream of liquid hydrogen LH from the tank 104. The first heat exchanger HX1 is configured to transfer heat between the first stream of compressed air CA1 and the stream of liquid hydrogen LH to yield a stream of liquid oxygen LO and a stream of gaseous hydrogen GH.

Valves (not shown) regulate the rate of flow of the first stream of compressed air CA1 and rate of flow of the stream of liquid hydrogen LH to the first heat exchanger HX1. The rate of flow of the first stream of compressed air CA1 is selected based on an oxygen demand of the gas turbine engine 110. The rate of flow of the stream of liquid hydrogen LH is selected based on a combined hydrogen demand of the fuel cell 102 and the gas turbine engine 110.

The second heat exchanger HX2 is configured to receive at least the stream of liquid oxygen LO and a second stream of compressed air CA2 (a second portion of the stream of compressed air CA from the compressor 112). The second heat exchanger HX2 is configured to transfer heat between the second stream of compressed air CA2 and the stream of liquid oxygen LO to yield a stream of gaseous oxygen GO.

The gas turbine engine 110 comprises a combustion chamber 114 and a turbine 116. The hydrogen fuel system 100 is configured to provide the combustion chamber 114 with a stream of oxygen and a stream of hydrogen (discussed further below). The hydrogen fuel system 100 is further configured to direct a stream of (hot) flue gas FG, generated from the combustion of the oxygen and hydrogen within the combustion chamber 114, from the combustion chamber 114 to the turbine 116. As the combustion chamber 114 utilises oxy-fuel combustion, the hot flue gas FG is substantially composed of superheated steam.

In the example shown in Figure 1, the third heat exchanger HX3 is (a hydrogen superheating heat exchanger) configured to receive the stream of flue gas FG from the turbine 116 and a first stream of gaseous hydrogen GH1 (a first portion of the stream of gaseous hydrogen GH from the first heat exchanger HX1). The third heat exchanger HX3 is configured to transfer heat between the stream of flue gas FG and the first stream of gaseous hydrogen GH1 to superheat the stream of hydrogen (e.g. to yield a stream of superheated hydrogen SH). The system 100 is configured to direct the stream of superheated hydrogen SH and the stream of gaseous oxygen GO to the combustion chamber 114.

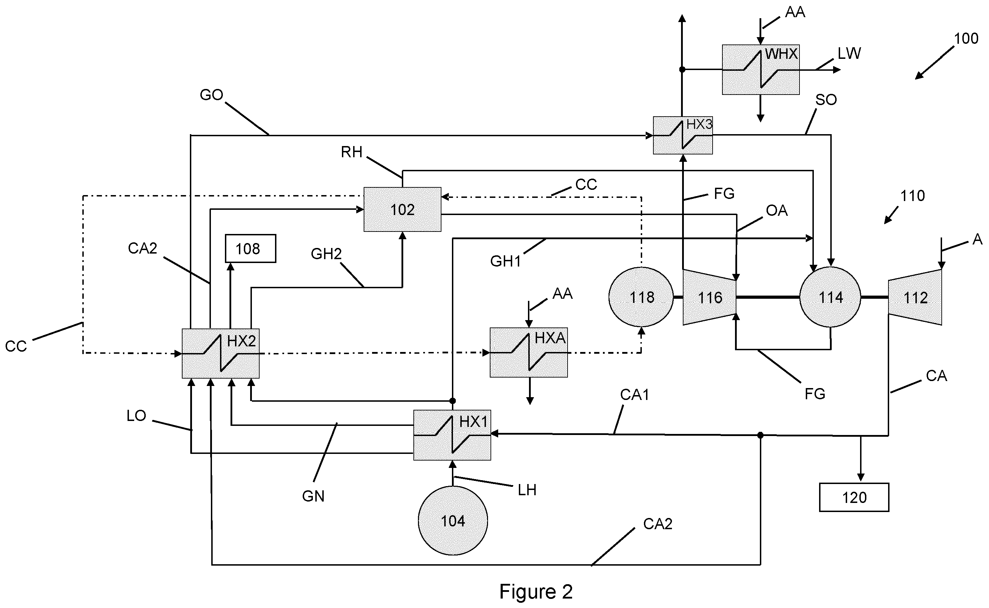

In the non claimed alternative example shown in Figure 2, the third heat exchanger HX3 is instead (a oxygen superheating heat exchanger) configured to receive the stream of flue gas FG from the turbine 116 and the stream of gaseous oxygen GO. The third heat exchanger HX3 is configured to transfer heat between the stream of flue gas FG and the stream of gaseous oxygen GO to superheat the stream of oxygen (e.g. to yield a stream of superheated oxygen SO). The system 100 is configured to direct the stream of superheated oxygen GO and the first stream of gaseous hydrogen GH1 to the combustion chamber 114.

It should be understood that the hydrogen fuel system 100 of Figure 1 may comprise an additional (fourth) heat exchanger similar to the third heat exchanger HX3 of the system 100 of Figure 2 (e.g. a oxygen superheating heat exchanger, configured to receive a stream of flue gas FG and the stream of gaseous oxygen GO, and to transfer heat between the two). Said fourth heat exchanger may be configured in parallel with the third heat exchanger HX3, so as to receive a portion of the stream of flue gas FG from the turbine 116, or in series with the third heat exchanger HX3 to receive the stream of flue gas FG upstream of or downstream from the third heat exchanger HX3.

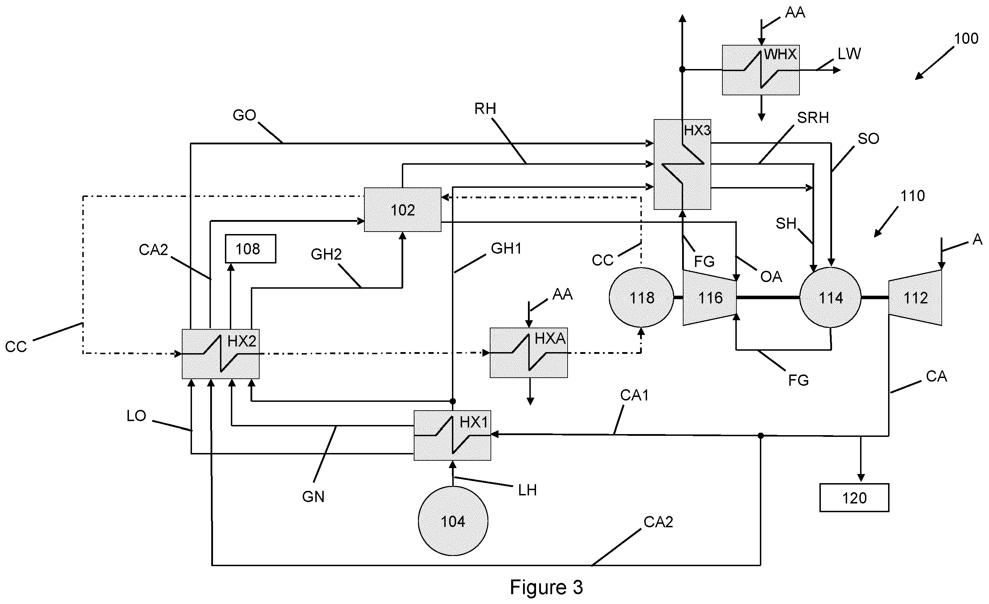

In the further alternative example shown in Figure 3, the third heat exchanger HX3 is (a hydrogen-oxygen superheating heat exchanger) configured to receive at least a stream of flue gas FG from the turbine 116, a first stream of gaseous hydrogen GH1 (a first portion of the stream of gaseous hydrogen GH from the first heat exchanger HX1), and the stream of gaseous oxygen GO. In this example, the third heat exchanger HX3 is configured to transfer heat between the stream of flue gas FG and the first stream of gaseous hydrogen GH1 and the stream of gaseous oxygen GO to superheat the stream of hydrogen and the stream of oxygen (e.g. to yield a stream of superheated hydrogen SH and a stream of superheated oxygen SO). The system 100 is configured to direct the stream of superheated hydrogen SH and the stream of superheated oxygen SO to the combustion chamber 114.

It will be appreciated that in the example shown in Figure 3 the first stream of gaseous hydrogen GH1 and the stream of gaseous oxygen GO may optionally be mixed prior to entering the third heat exchanger HX3.

In the examples shown in Figures 1-3, the hybrid system 100 is configured to direct a second stream of gaseous hydrogen GH2 (a second portion of the stream of gaseous hydrogen GH from the first heat exchanger HX1) to the fuel cell 102.

The fuel cell 102 is configured to receive the second stream of gaseous hydrogen GH2 from the first heat exchanger HX1 and the second stream of compressed air CA2 from the second heat exchanger HX2. However, compressed air may be supplied to the fuel cell 102 from other sources.

A conversion ratio of the fuel cell 102 may be in the range of 0.8-0.98, such that a stream of residual hydrogen RH is output from the fuel cell 102. As shown in the example in Figure 1, the hydrogen fuel system 100 may be configured to direct the stream of residual hydrogen RH (e.g. hydrogen that is not utilised in the fuel cell reaction) to the combustion chamber 114. Alternatively (as shown in Figure 3), the hydrogen fuel system 100 may be arranged to direct the stream of residual hydrogen RH to the third heat exchanger HX3 to superheat the stream of residual hydrogen (e.g. to yield a stream of superheated residual hydrogen SRH), and then to direct the stream of superheated residual hydrogen SRH to the combustion chamber 114 to be used in combustion.

In another alternative example not shown in the Figures, the hydrogen fuel system 100 comprises a fifth heat exchanger, which is (a residual hydrogen superheating heat exchanger) configured to receive a stream of flue gas FG from the turbine and the stream of residual hydrogen RH from the fuel cell 102, and configured to transfer heat between the stream of flue gas FG and the stream of residual hydrogen RH to superheat the residual hydrogen (e.g. to yield the stream of superheated residual hydrogen SRH). Said fifth heat exchanger may be arranged in parallel with the third heat exchanger HX3 and fourth heat exchanger, so as to receive a portion of the stream of flue gas FG from the turbine 116, or in series with the third heat exchanger HX3 and fourth heat exchanger to receive the stream of flue gas FG upstream of or downstream from the third heat exchanger HX3 or fourth heat exchanger.

The hydrogen fuel system 100 may be configured to direct a stream of outlet air OA (e.g., air that is not utilised in the fuel cell reaction) from the fuel cell 102 to the turbine 116 of the gas turbine engine 110.

As shown in Figures 1-3, the hydrogen fuel system 100 may comprise a water recovery heat exchanger WHX configured to receive a stream of flue gas FG from the turbine 116 and a stream of ambient air AA, wherein the water recovery heat exchanger WHX is configured to transfer heat from the stream of flue gas FG to the stream of ambient air AA to yield a stream of water LW. The water recovery heat exchanger WHX may be arranged to receive the stream of flue gas FG from the turbine 116 via other heat exchangers of the system 100. For example, as shown in Figure 1, the water recovery heat exchanger WHX is arranged to receive the stream of flue gas (directly) from the third (hydrogen superheating) heat exchanger HX3. As shown in Figure 2, the water recovery heat exchanger WHX is arranged to receive the stream of flue gas (directly) from the third (oxygen superheating) heat exchanger HX3. As shown in Figure 3, the water recovery heat exchanger WHX is arranged to receive the stream of flue gas (directly) from the third (hydrogen-oxygen superheating) heat exchanger HX3.

In hydrogen fuel systems having fourth heat exchangers and fifth heat exchangers as described above, the water recovery heat exchanger WHX may be arranged to receive the stream of flue gas from at least one of the third heat exchanger, the fourth heat exchanger and the fifth heat exchanger. The third heat exchanger, fourth heat exchanger and fifth heat exchanger may be arranged in the flue gas stream in series or in parallel.

The system may be configured to direct the stream of water to a cooling system for the combustion chamber and/or the turbine. For example, a cooling system of the turbine may utilise the (liquid) water by injecting the water through inner channels of the turbine blades.

In another example, a cooling system of the combustion chamber may utilise the water by injecting the water into the combustion chamber to lower the flame temperature.

As shown in Figures 1-3, the hybrid system 100 comprises a coolant circuit CC configured to absorb heat from components of the gas turbine 110 and/or the fuel cell 102 into a working fluid within the coolant circuit CC. For example, as shown in Figures 1-3, the coolant circuit CC is configured to convey a flow of working fluid to control the temperature of (e.g. cool) the fuel cell 102 and an electric motor 118 coupled to the gas turbine engine 110.

The coolant circuit CC comprises an ambient heat exchanger HXA. The ambient heat exchanger HXA is configured to transfer heat between the working fluid of the coolant circuit CC and the ambient atmosphere (e.g. to reject heat from the coolant circuit CC to the ambient atmosphere to cool the working fluid).

In the examples shown in Figures 1-3, the coolant circuit CC comprises the second heat exchanger HX2. Accordingly, the second heat exchanger HX2 is configured to transfer heat between the coolant circuit CC and at least one of the fluid streams in the second heat exchanger HX2. For example, the second heat exchanger HX2 may be configured to transfer heat between the coolant circuit CC and one or more of the second (portion of the) stream of gaseous hydrogen GH2, the stream of liquid oxygen LO, the second stream of compressed air CA2, and the stream of gaseous nitrogen GN.

In addition to generating a stream of liquid oxygen LO from the first stream of compressed air CA1, the first heat exchanger HX1 may be configured to generate a stream of gaseous nitrogen GN from the first stream of compressed air CA1. In other words, the first heat exchanger HX1 may be configured to transfer heat between the first stream of compressed air CA1 and the stream of liquid hydrogen LH to yield a stream of liquid oxygen LO, a stream of gaseous hydrogen GH, and a stream of gaseous nitrogen GN.

As shown in Figures 1-3, the system 100 is configured to direct the stream of gaseous nitrogen GN to the second heat exchanger HX2, and the second heat exchanger HX2 is configured to transfer heat between the stream of gaseous nitrogen GN and at least one of the other streams (e.g. the stream of liquid oxygen LO and/or the second stream of compressed air CA2) in the second heat exchanger HX2.

Alternatively, or additionally, the stream of gaseous nitrogen GN may be directed to a fire suppression system 108 (e.g. for use as a fire suppression or prevention agent). For this use, the stream of gaseous nitrogen GN should contain less than 15 mol.% oxygen, which is the maximum oxygen content that can still extinguish a fire. In various embodiments, the stream of gaseous nitrogen GN may contain less than 5 mol.% oxygen, or less than 1 mol.% oxygen.

Alternatively, or additionally, the stream of gaseous nitrogen GN may be directed to the tank 104 of liquid hydrogen to provide/aid in temperature control (e.g. cooling) of the tank 104. Similarly, the stream of gaseous nitrogen GN may be directed to (superconducting) electronic components of the aircraft, and/or directed to the turbine blades of the turbine, to provide/aid in temperature control (e.g. cooling) of these components.

For example, the system 100 could be configured to direct the stream of gaseous nitrogen GN from the first heat exchanger HX1 to the tank 104 for temperature control of the tank 104, and then from the tank 104 to the second heat exchanger HX2, wherein the second heat exchanger HX2 is configured to transfer heat between the stream of gaseous nitrogen GN and at least one of the streams (e.g. the stream of liquid oxygen LO and/or the second stream of compressed air CA2) in the second heat exchanger HX2, and then from the second heat exchanger HX2 to the fire suppression system 108.

A method of operating the hydrogen fuel system 100 will now be described with reference to the Figures.

Firstly, the method comprises directing a first stream of compressed air CA1 to the first heat exchanger HX1. The compressor 112 may be used to generate a stream of compressed air CA by compressing a stream of air A (for example) to approximately 2.5 bar absolute pressure. Depending on the ambient conditions, the temperature of the compressed air after leaving the compressor 112 may range from 30-220°C. Next, most (approximately 80%) of the stream of compressed air CA is diverted to an environmental control system 120. The remaining stream of compressed air is split into a first stream of compressed air CA1 (approximately 40% of the stream of compressed air CA) and a second stream of compressed air CA2 (approximately 60% of the stream of compressed air CA).

In addition to directing the first stream of compressed air CA1 to the first heat exchanger

HX1, a stream of liquid hydrogen LH is directed to the first heat exchanger HX1. The stream of liquid hydrogen LH may be provided from a source of liquid hydrogen such as a tank 104. The hydrogen stored within has been cryogenically cooled to liquid state (~-253°C = ~20K).

To raise the temperature of the stream of liquid hydrogen LH and evaporate it to yield a stream of gaseous hydrogen GH, the first heat exchanger HX1 transfers heat between the first stream of compressed air CA1 and the stream of liquid hydrogen LH. The first stream of compressed air CA1 is thereby cooled to condense the oxygen in the compressed air and a stream of liquid oxygen LO is separated out, leaving behind a stream of gaseous nitrogen GN. The outlet temperature of the stream of liquid oxygen LO and the stream of gaseous nitrogen GN is in the range of 77.4-90.2K.

After leaving first heat exchanger HX1, the stream of gaseous hydrogen GH is split into a first portion and a second portion: a first (portion of the) stream of gaseous hydrogen GH1 is directed to the combustion chamber 114 via the third heat exchanger HX3, and a second (portion of the) stream of gaseous hydrogen GH2 is directed to the fuel cell 102 via the second heat exchanger HX2.

After leaving the first heat exchanger HX1, the stream of liquid oxygen LO and the stream of gaseous nitrogen GN are directed to a second heat exchanger HX2. The second stream of compressed air CA2 is also directed to the second heat exchanger HX2. As shown in Figures 1-3, the second heat exchanger HX2 also forms part of a coolant circuit CC.

The coolant circuit CC is arranged in a heat exchange relationship with components of the gas turbine engine and components of the fuel cell, such that the working fluid circulating in the coolant circuit CC absorbs heat from these components. Conventionally, this heat in the coolant circuit CC is rejected/transferred, in the ambient heat exchanger HXA, to a stream of ambient air AA. However, in the described systems, the heat in the coolant circuit CC can be utilised in the second heat exchanger HX2. Thus, in the second heat exchanger HX2, heat is transferred between the coolant circuit CC and the streams of liquid oxygen LO, gaseous hydrogen GH2, compressed air CA2, and gaseous nitrogen GN in order to yield a stream of gaseous oxygen GO and to control and/or stabilise the temperature of each of the streams of gaseous hydrogen GH2, compressed air CA2, and gaseous nitrogen GN depending on its particular requirements.

For example, the streams of liquid oxygen LO and gaseous nitrogen GN may be used to cool the temperature of the compressed air CA2, because, to be used in the fuel cell 102, the air optimally should be in the operating range of 0-95°C. Then, the stream of gaseous oxygen GO in the second heat exchanger HX2 may be heated by the coolant circuit CC so that it is at an optimal temperature for combustion.

With reference to Figure 1, the stream of hot flue gas FG (from the turbine 116) and the first stream of gaseous hydrogen GH1 (from the first heat exchanger HX1) are directed to the third heat exchanger HX3. Thus, in the third heat exchanger HX3, heat is transferred between the stream of flue gas FG and the stream of gaseous hydrogen GH1 in order to superheat the stream of hydrogen. Then, the stream of superheated hydrogen SH (from the third heat exchanger HX3) and the stream of gaseous oxygen GO (from the second heat exchanger HX2) are directed to the combustion chamber 114 to be combusted.

With reference to Figure 2, not forming part of the claimed invention, the stream of hot flue gas FG (from the turbine 116) and the stream of gaseous oxygen GO (from the second heat exchanger HX2) are directed to the third heat exchanger HX3. Thus, in the third heat exchanger HX3, heat is transferred between the stream of flue gas FG and the stream of gaseous oxygen GO in order to superheat the stream of oxygen. Then, the stream of gaseous hydrogen GH1 (from the first heat exchanger HX1) and the stream of superheated oxygen SO (from the third heat exchanger HX3) are directed to the combustion chamber 114 to be combusted.

With reference to Figure 3, the stream of hot flue gas FG (from the turbine 116), the stream of gaseous oxygen GO (from the second heat exchanger HX2), and the first stream of gaseous hydrogen GH1 (from the first heat exchanger HX1) are directed to the third heat exchanger HX3. Thus, in the third heat exchanger HX3, heat is transferred between the stream of flue gas FG, and the stream of gaseous oxygen GO and the stream of gaseous hydrogen GH1, in order to superheat the stream of hydrogen and the stream of oxygen. Then, the superheated streams SH, SO are directed to the combustion chamber 114 to be combusted.

In examples comprising a third heat exchanger HX3 and a fourth heat exchanger (not shown), a stream of flue gas FG and the first stream of gaseous hydrogen GH1 are directed to the third heat exchanger, and a stream of flue gas FG and the stream of gaseous oxygen GO are directed to the fourth heat exchanger. The stream of flue gas FG may be directed to the fourth heat exchanger either from the turbine 116 or from the third heat exchanger HX3. Then, the stream of superheated hydrogen SH (from the third heat exchanger HX3) and the stream of superheated oxygen SO (from the fourth heat exchanger) are directed to the combustion chamber 114 to be combusted.

Thus, the gaseous oxygen GO and the superheated hydrogen GH may be combusted in the combustion chamber 114 to yield a stream of (hot) flue gas FG. The stream of flue gas FG is directed to the turbine 116 to be utilised by the turbine 116 to generate mechanical and/or electrical power.

After leaving the second heat exchanger HX2, the stream of compressed air CA2 is directed to the fuel cell 102. The fuel cell 102 utilises the stream of compressed air CA2 and the second stream of gaseous hydrogen GH2 to generate electricity. The fuel cell conversion ratio may be in the range of 0.8-0.98, such that there is residual hydrogen from the fuel cell 102 that is not used in the fuel cell conversion process. This stream of residual hydrogen RH is directed to the combustion chamber 114 to be used in combustion.

Alternatively (as shown in Figure 3), the stream of residual hydrogen RH is first directed to the third heat exchanger HX3 to superheat the stream of residual hydrogen RH, and then the stream of superheated residual hydrogen SRH is directed to the combustion chamber 114 to be used in combustion. In another alternative example (not shown), the stream of residual hydrogen RH is first directed to a fifth heat exchanger to superheat the stream of residual hydrogen RH, and then the stream of superheated residual hydrogen SRH is directed to the combustion chamber 114 to be used in combustion.

Similarly, air that is not used as part of the fuel cell conversion process is directed as a stream of outlet air OA to the turbine 116.

As shown in Figures 1-3, a stream of flue gas FG from the turbine 116 that has (at least) passed through the third heat exchanger HX3 may be directed to the water recovery heat exchanger WHX. Using the water recovery heat exchanger WHX, heat is transferred (e.g. rejected) from the stream of flue gas to the stream of ambient air to yield a stream of water out of the flue gas (which is, as mentioned above, predominantly steam). In hydrogen fuel systems 100 having fourth heat exchangers and fifth heat exchangers as described above, the water recovery heat exchanger WHX may be arranged to receive the stream of flue gas from at least one of the third heat exchanger, the fourth heat exchanger and the fifth heat exchanger. The third heat exchanger, fourth heat exchanger and fifth heat exchanger may be arranged in the flue gas stream FG in series or in parallel.

The stream of water LW may be directed to a cooling system (not shown) for the combustion chamber 114 and/or the turbine 116. For example, a cooling system of the turbine 116 may utilise the (liquid) water by injecting the water through inner channels of the turbine blades. In another example, a cooling system of the combustion chamber 114 may utilise the water by injecting the water into the combustion chamber 114 to lower the flame temperature.

After leaving the second heat exchanger HX2, the stream of gaseous nitrogen GN is directed to a fire suppression system 108 to be stored for use as a cooling medium (e.g. for cooling one or more of a tank of liquid hydrogen fuel, electronics, superconducting electronics, turbine blades, etc), as a fire suppressant, and/or as a fire prevention agent. Thus, an aircraft having the described hydrogen fuel system may not require a separate source of nitrogen for fire suppression, lowering the overall weight of the aircraft.

In any of the examples shown in Figures 1 to 3, different types of heat exchangers HX may be used in this configuration based on the hydrogen and oxygen phase at its entrance (liquid, gas or a two-phase flow). Under different conditions a system controller may be configured to modify the system operating points, for example by controlling the liquid hydrogen, air or working fluid flow entering the heat exchangers HX through a bypass valve (not shown in the Figures). In some examples, the amount of working fluid or ambient air flowing into the fourth heat exchanger HXA may be controlled through a (bypass) valve or radiator baffle (not shown in the Figures) to ensure a proper working fluid temperature under different ambient conditions. Depending on the configuration, the heat exchangers HX may include components for moisture removal (such as a condenser, water separator and reheater) to protect from possible freezing issues.

In one example, the first heat exchanger HX1 could instead be configured to produce a stream of liquid nitrogen instead of a stream of gaseous nitrogen, where the stream of liquid nitrogen is then heated in the second heat exchanger HX2 to produce the stream of gaseous nitrogen GN.

The examples described herein and discussed with reference to Figures 1 to 3 provide a more sustainable architecture and use of oxy-fuel combustion. As a result of combusting pure oxygen and pure hydrogen, no harmful compounds such as nitrogen oxides are produced in the combustion chamber 114 and thus the described examples provide for a higher gas turbine efficiency. Moreover, superheating the pure oxygen and pure hydrogen before combustion (utilising otherwise waste heat energy) further improves gas turbine efficiency.

Additionally, some examples are configured to produce a source of nitrogen which in turn can be used as a fire suppression agent or fire protection agent. There is therefore no need for compressed nitrogen tanks for fire suppression, which in turn results in a lower aircraft weight. Due to the cryogenic temperature of the air, air pollutants are in the solid state, meaning that the pollutant (CO₂, hydrocarbons, aromatics, etc.) separation process is significantly easier.

As can be seen in the Figures, since only one compressor 112 is needed, this results in a lower aircraft weight. Since only one turbine 116 is needed, this also results in a lower aircraft weight. Thus, the examples described herein also provide a simpler gas turbine design, that is cheaper, more reliable, has a higher energy efficiency and lower maintenance costs.

The systems described above may also comprise additional auxiliary equipment such as pumps, solid separator, dehumidifiers, valves, splitters etc, which are not shown in the Figures.

Although this disclosure has been described in terms of preferred examples, it should be understood that these examples are illustrative only and that the claims are not limited to those examples. Those skilled in the art will be able to make modifications and alternatives in view of the disclosure provided they fall within the scope of the appended claims.

## Claims

1. A system (100) comprising:
a gas turbine (110) having a combustion chamber (114) and a turbine (116);
a first heat exchanger (HX1) configured to receive a first stream of compressed air (CA1) and a stream of liquid hydrogen (LH), wherein the first heat exchanger (HX1) is configured to transfer heat between the first stream of compressed air (CA1) and the stream of liquid hydrogen (LH) to yield a stream of liquid oxygen (LO) and a stream of gaseous hydrogen (GH);
a second heat exchanger (HX2) configured to heat the stream of liquid oxygen (LO) to yield a stream of gaseous oxygen (GO); and
a third heat exchanger (HX3) configured to receive a stream of flue gas (FG)from the turbine (116) and the stream of gaseous hydrogen (GH), wherein the third heat exchanger (HX3) is configured to transfer heat between the stream of flue gas (FG) and the stream of gaseous hydrogen (GH) to superheat the stream of hydrogen;
wherein the system is configured to direct the stream of superheated hydrogen (SH) and the stream of gaseous oxygen (GO) to the combustion chamber (114).

2. The system of claim 1, wherein the temperature of the stream of superheated hydrogen (SH) is between 400K to 500K.

3. The system of claim 1 or claim 2, wherein the system comprises a fourth heat exchanger configured to receive a stream of flue gas (FG) from the turbine (116) and the stream of gaseous oxygen (GO), wherein the fourth heat exchanger is configured to transfer heat between the flue gas (FG) and the stream of gaseous oxygen (GO) to superheat the stream of oxygen; wherein the third heat exchanger (HX3) and the fourth heat exchanger are arranged to receive the streams of flue gas from the turbine in parallel; and wherein the system is configured to direct the stream of superheated oxygen (SO) and the stream of superheated hydrogen (SH) to the combustion chamber (114);
or
wherein the third heat exchanger (HX3) is configured to receive the stream of gaseous oxygen (GO), wherein the third heat exchanger (HX3) is configured to transfer heat between the flue gas (FG) and both the stream of gaseous oxygen (GO) and the stream of gaseous hydrogen (GH) to superheat both the stream of oxygen and the stream of hydrogen; and wherein the system is configured to direct the stream of superheated oxygen (SO) and the stream of superheated hydrogen (SH) to the combustion chamber (114).

4. The system of any preceding claim, comprising a fuel cell (102), and wherein the system is configured to:
direct a first portion of the stream of gaseous hydrogen (GH1) to the third heat exchanger (HX3) or the combustion chamber (114); and
direct a second portion of the stream of gaseous hydrogen (GH2) to the fuel cell (102), preferably via the second heat exchanger (HX2).

5. The system of claim 4, wherein the system is configured to direct a stream of residual hydrogen (RH) from the fuel cell (102) to the combustion chamber (114); or
wherein the system is configured to direct a stream of residual hydrogen (RH) from the fuel cell (102) to the third heat exchanger (HX3) to superheat the stream of residual hydrogen, and wherein the system is configured to direct the stream of superheated residual hydrogen (SRH) to the combustion chamber (114).

6. A method comprising:
directing a first stream of compressed air (CA1) and a stream of liquid hydrogen (LH) to a first heat exchanger (HX1);
transferring heat, using the first heat exchanger (HX1), between the first stream of compressed air (CA1) and the stream of liquid hydrogen (LH) to yield a stream of liquid oxygen (LO) and a stream of gaseous hydrogen (GH);
directing the stream of liquid oxygen (LO) to a second heat exchanger (HX2);
transferring heat, using the second heat exchanger (HX2), to the stream of liquid oxygen (LO) to yield a stream of gaseous oxygen (GO);
directing a stream of flue gas (FG) from a turbine (116) of a gas turbine (110), and the stream of gaseous hydrogen (GH), to a third heat exchanger (HX3);
transferring heat, using the third heat exchanger (HX3), between the stream of flue gas (FG) and the stream of gaseous hydrogen (GH) to superheat the stream of hydrogen; and
directing the stream of superheated hydrogen (SH) and the stream of gaseous oxygen (GO) to a combustion chamber (114) of the gas turbine (110).

7. The method of claim 6, wherein the temperature of the stream of superheated hydrogen (SH) is between 400K to 500K.

8. The method of claim 6 or claim 7 comprising:
directing a stream of flue gas (FG) from the turbine (116) of the gas turbine (110) and the stream of gaseous hydrogen (GH) to the third heat exchanger (HX3);
directing a stream of flue gas (FG) from the turbine (116) of the gas turbine (110) and the stream of gaseous oxygen (GO) to a fourth heat exchanger;
wherein the third heat exchanger (HX3) and the fourth heat exchanger are arranged to receive the streams of flue gas from the turbine in parallel;
transferring heat, using the third heat exchanger (HX3), between the stream of flue gas and the stream of gaseous hydrogen to superheat the stream of hydrogen;
transferring heat, using the fourth heat exchanger, between the stream of flue gas and the stream of gaseous oxygen to superheat the stream of oxygen; and
directing the stream of superheated oxygen (SO) and the stream of superheated hydrogen (SH) to the combustion chamber (114) of the gas turbine (110);
or
directing a stream of flue gas (FG) from the turbine (116) of the gas turbine (110), the stream of gaseous oxygen (GO) and the stream of gaseous hydrogen (GH) to the third heat exchanger (HX3);
transferring heat, using the third heat exchanger (HX3), between the stream of flue gas and both the stream of gaseous hydrogen and the stream of gaseous oxygen to superheat both the stream of hydrogen and the stream of oxygen; and
directing the stream of superheated oxygen (SO) and the stream of superheated hydrogen (SH) to the combustion chamber (114) of the gas turbine (110).

9. The method of any one of claims 6 to 8 comprising:
directing a first portion of the stream of gaseous hydrogen (GH1) from the first heat exchanger (HX1) to the third heat exchanger (HX3) or the combustion chamber (114); and
directing a second portion of the stream of gaseous hydrogen (GH2) from the first heat exchanger (HX1) to a fuel cell (102), preferably via the second heat exchanger (HX2).

10. The method of claim 9 comprising:
directing a stream of residual hydrogen (RH) from the fuel cell (102) to the combustion chamber (114); or
directing a stream of residual hydrogen (RH) from the fuel cell (102) to the third heat exchanger (HX3);
transferring heat, using the third heat exchanger (HX3), between the stream of flue gas (FG) and the stream of residual hydrogen (RH) to superheat the stream of residual hydrogen; and
directing the stream of superheated residual hydrogen (SRH) to the combustion chamber (114).

## Patentansprüche

1. Ein System (100), umfassend:
eine Gasturbine (110) mit einer Brennkammer (114) und einer Turbine (116);
einen ersten Wärmetauscher (HX1), der konfiguriert ist, um einen ersten Strom von Druckluft (CA1) und einen Strom von flüssigem Wasserstoff (LH) zu empfangen, wobei der erste Wärmetauscher (HX1) konfiguriert ist, um Wärme zwischen dem ersten Strom von Druckluft (CA1) und dem Strom von flüssigem Wasserstoff (LH) zu übertragen, um einen Strom von flüssigem Sauerstoff (LO) und einen Strom von gasförmigem Wasserstoff (GH) zu erzeugen;
einen zweiten Wärmetauscher (HX2), der konfiguriert ist, um den Strom von flüssigem Sauerstoff (LO) zu erwärmen, um einen Strom von gasförmigem Sauerstoff (GO) zu erzeugen; und
einen dritten Wärmetauscher (HX3), der konfiguriert ist, um einen Strom von Abgas (FG) von der Turbine (116) und den Strom von gasförmigem Wasserstoff (GH) zu empfangen, wobei der dritte Wärmetauscher (HX3) konfiguriert ist, um Wärme zwischen dem Strom von Abgas (FG) und dem Strom von gasförmigem Wasserstoff (GH) zu übertragen, um den Wasserstoffstrom zu überhitzen;
wobei das System konfiguriert ist, um den Strom von überhitztem Wasserstoff (SH) und den Strom von gasförmigem Sauerstoff (GO) zur Brennkammer (114) zu leiten.

2. System nach Anspruch 1, wobei die Temperatur des Stroms von überhitztem Wasserstoff (SH) zwischen 400K und 500K liegt.

3. System nach Anspruch 1 oder Anspruch 2, wobei das System einen vierten Wärmetauscher umfasst, der konfiguriert ist, um einen Strom von Abgas (FG) von der Turbine (116) und den Strom von gasförmigem Sauerstoff (GO) zu empfangen, wobei der vierte Wärmetauscher konfiguriert ist, um Wärme zwischen dem Abgas (FG) und dem Strom von gasförmigem Sauerstoff (GO) zu übertragen, um den Sauerstoffstrom zu überhitzen; wobei der dritte Wärmetauscher (HX3) und der vierte Wärmetauscher angeordnet sind, um die Ströme von Abgas von der Turbine parallel zu empfangen; und wobei das System konfiguriert ist, um den Strom von überhitztem Sauerstoff (SO) und den Strom von überhitztem Wasserstoff (SH) zur Brennkammer (114) zu leiten;
oder
wobei der dritte Wärmetauscher (HX3) konfiguriert ist, um den Strom von gasförmigem Sauerstoff (GO) zu empfangen, wobei der dritte Wärmetauscher (HX3) konfiguriert ist, um Wärme zwischen dem Abgas (FG) und sowohl dem Strom von gasförmigem Sauerstoff (GO) als auch dem Strom von gasförmigem Wasserstoff (GH) zu übertragen, um sowohl den Sauerstoffstrom als auch den Wasserstoffstrom zu überhitzen; und wobei das System konfiguriert ist, um den Strom von überhitztem Sauerstoff (SO) und den Strom von überhitztem Wasserstoff (SH) zur Brennkammer (114) zu leiten.

4. System nach einem der vorhergehenden Ansprüche, umfassend eine Brennstoffzelle (102), und wobei das System konfiguriert ist, um:
einen ersten Teil des Stroms von gasförmigem Wasserstoff (GH1) zum dritten Wärmetauscher (HX3) oder zur Brennkammer (114) zu leiten; und
einen zweiten Teil des Stroms von gasförmigem Wasserstoff (GH2) zur Brennstoffzelle (102) zu leiten, vorzugsweise über den zweiten Wärmetauscher (HX2).

5. System nach Anspruch 4, wobei das System konfiguriert ist, um einen Strom von Restwasserstoff (RH) von der Brennstoffzelle (102) zur Brennkammer (114) zu leiten; oder
wobei das System konfiguriert ist, um einen Strom von Restwasserstoff (RH) von der Brennstoffzelle (102) zum dritten Wärmetauscher (HX3) zu leiten, um den Strom von Restwasserstoff zu überhitzen, und wobei das System konfiguriert ist, um den Strom von überhitztem Restwasserstoff (SRH) zur Brennkammer (114) zu leiten.

6. Ein Verfahren, umfassend:
Leiten eines ersten Stroms von Druckluft (CA1) und eines Stroms von flüssigem Wasserstoff (LH) zu einem ersten Wärmetauscher (HX1);
Übertragen von Wärme unter Verwendung des ersten Wärmetauschers (HX1) zwischen dem ersten Strom von Druckluft (CA1) und dem Strom von flüssigem Wasserstoff (LH), um einen Strom von flüssigem Sauerstoff (LO) und einen Strom von gasförmigem Wasserstoff (GH) zu erzeugen;
Leiten des Stroms von flüssigem Sauerstoff (LO) zu einem zweiten Wärmetauscher (HX2);
Übertragen von Wärme unter Verwendung des zweiten Wärmetauschers (HX2) auf den Strom von flüssigem Sauerstoff (LO), um einen Strom von gasförmigem Sauerstoff (GO) zu erzeugen;
Leiten eines Stroms von Abgas (FG) von einer Turbine (116) einer Gasturbine (110) und des Stroms von gasförmigem Wasserstoff (GH) zu einem dritten Wärmetauscher (HX3);
Übertragen von Wärme unter Verwendung des dritten Wärmetauschers (HX3) zwischen dem Strom von Abgas (FG) und dem Strom von gasförmigem Wasserstoff (GH), um den Wasserstoffstrom zu überhitzen; und
Leiten des Stroms von überhitztem Wasserstoff (SH) und des Stroms von gasförmigem Sauerstoff (GO) zu einer Brennkammer (114) der Gasturbine (110).

7. Verfahren nach Anspruch 6, wobei die Temperatur des Stroms von überhitztem Wasserstoff (SH) zwischen 400K und 500K liegt.

8. Verfahren nach Anspruch 6 oder Anspruch 7, umfassend:
Leiten eines Stroms von Abgas (FG) von der Turbine (116) der Gasturbine (110) und des Stroms von gasförmigem Wasserstoff (GH) zum dritten Wärmetauscher (HX3);
Leiten eines Stroms von Abgas (FG) von der Turbine (116) der Gasturbine (110) und des Stroms von gasförmigem Sauerstoff (GO) zu einem vierten Wärmetauscher;
wobei der dritte Wärmetauscher (HX3) und der vierte Wärmetauscher angeordnet sind, um die Ströme von Abgas von der Turbine parallel zu empfangen;
Übertragen von Wärme unter Verwendung des dritten Wärmetauschers (HX3) zwischen dem Strom von Abgas und dem Strom von gasförmigem Wasserstoff, um den Wasserstoffstrom zu überhitzen;
Übertragen von Wärme unter Verwendung des vierten Wärmetauschers zwischen dem Strom von Abgas und dem Strom von gasförmigem Sauerstoff, um den Sauerstoffstrom zu überhitzen; und
Leiten des Stroms von überhitztem Sauerstoff (SO) und des Stroms von überhitztem Wasserstoff (SH) zur Brennkammer (114) der Gasturbine (110);
oder
Leiten eines Stroms von Abgas (FG) von der Turbine (116) der Gasturbine (110), des Stroms von gasförmigem Sauerstoff (GO) und des Stroms von gasförmigem Wasserstoff (GH) zum dritten Wärmetauscher (HX3);
Übertragen von Wärme unter Verwendung des dritten Wärmetauschers (HX3) zwischen dem Strom von Abgas und sowohl dem Strom von gasförmigem Wasserstoff als auch dem Strom von gasförmigem Sauerstoff, um sowohl den Wasserstoffstrom als auch den Sauerstoffstrom zu überhitzen; und
Leiten des Stroms von überhitztem Sauerstoff (SO) und des Stroms von überhitztem Wasserstoff (SH) zur Brennkammer (114) der Gasturbine (110).

9. Verfahren nach einem der Ansprüche 6 bis 8, umfassend:
Leiten eines ersten Teils des Stroms von gasförmigem Wasserstoff (GH1) vom ersten Wärmetauscher (HX1) zum dritten Wärmetauscher (HX3) oder zur Brennkammer (114); und
Leiten eines zweiten Teils des Stroms von gasförmigem Wasserstoff (GH2) vom ersten Wärmetauscher (HX1) zu einer Brennstoffzelle (102), vorzugsweise über den zweiten Wärmetauscher (HX2).

10. Verfahren nach Anspruch 9, umfassend:
Leiten eines Stroms von Restwasserstoff (RH) von der Brennstoffzelle (102) zur Brennkammer (114); oder
Leiten eines Stroms von Restwasserstoff (RH) von der Brennstoffzelle (102) zum dritten Wärmetauscher (HX3);
Übertragen von Wärme unter Verwendung des dritten Wärmetauschers (HX3) zwischen dem Strom von Abgas (FG) und dem Strom von Restwasserstoff (RH), um den Strom von Restwasserstoff zu überhitzen; und
Leiten des Stroms von überhitztem Restwasserstoff (SRH) zur Brennkammer (114).

## Revendications

1. Système (100) comprenant :
une turbine à gaz (110) comportant une chambre de combustion (114) et une turbine (116) ;
un premier échangeur de chaleur (HX1) configuré pour recevoir un premier flux d'air comprimé (CA1) et un flux d'hydrogène liquide (LH), dans lequel le premier échangeur de chaleur (HX1) est configuré pour transférer de la chaleur entre le premier flux d'air comprimé (CA1) et le flux d'hydrogène liquide (LH) pour produire un flux d'oxygène liquide (LO) et un flux d'hydrogène gazeux (GH) ;
un deuxième échangeur de chaleur (HX2) configuré pour chauffer le flux d'oxygène liquide (LO) afin de produire un flux d'oxygène gazeux (GO) ; et
un troisième échangeur de chaleur (HX3) configuré pour recevoir un flux de gaz de combustion (FG) provenant de la turbine (116) et le flux d'hydrogène gazeux (GH), dans lequel le troisième échangeur de chaleur (HX3) est configuré pour transférer la chaleur entre le flux de gaz de combustion (FG) et le flux d'hydrogène gazeux (GH) afin de surchauffer le flux d'hydrogène ;
dans lequel le système est configuré pour diriger le flux d'hydrogène surchauffé (SH) et le flux d'oxygène gazeux (GO) vers la chambre de combustion (114).

2. Système selon la revendication 1, dans lequel la température du flux d'hydrogène surchauffé (SH) est comprise entre 400 K et 500 K.

3. Système selon la revendication 1 ou 2, dans lequel le système comprend un quatrième échangeur de chaleur configuré pour recevoir un flux de gaz de combustion (FG) provenant de la turbine (116) et le flux d'oxygène gazeux (GO), dans lequel le quatrième échangeur de chaleur est configuré pour transférer de la chaleur entre les gaz de combustion (FG) et le flux d'oxygène gazeux (GO) afin de surchauffer le flux d'oxygène ; dans lequel le troisième échangeur de chaleur (HX3) et le quatrième échangeur de chaleur sont disposés de manière à recevoir les flux de gaz de combustion provenant de la turbine en parallèle ; et dans lequel le système est configuré pour diriger le flux d'oxygène surchauffé (SO) et le flux d'hydrogène surchauffé (SH) vers la chambre de combustion (114) ;
ou
dans lequel le troisième échangeur de chaleur (HX3) est configuré pour recevoir le flux d'oxygène gazeux (GO), dans lequel le troisième échangeur de chaleur (HX3) est configuré pour transférer la chaleur entre les gaz de combustion (FG) et à la fois le flux d'oxygène gazeux (GO) et le flux d'hydrogène gazeux (GH) pour surchauffer à la fois le flux d'oxygène et le flux d'hydrogène ; et dans lequel le système est configuré pour diriger le flux d'oxygène surchauffé (SO) et le flux d'hydrogène surchauffé (SH) vers la chambre de combustion (114).

4. Système selon une quelconque revendication précédente, comprenant une pile à combustible (102), et dans lequel le système est configuré pour :
diriger une première partie du flux d'hydrogène gazeux (GH1) vers le troisième échangeur de chaleur (HX3) ou la chambre de combustion (114) ; et
diriger une seconde partie du flux d'hydrogène gazeux (GH2) vers la pile à combustible (102), de préférence par l'intermédiaire du deuxième échangeur de chaleur (HX2).

5. Système selon la revendication 4, dans lequel le système est configuré pour diriger un flux d'hydrogène résiduel (RH) de la pile à combustible (102) vers la chambre de combustion (114) ; ou
dans lequel le système est configuré pour diriger un flux d'hydrogène résiduel (RH) de la pile à combustible (102) vers le troisième échangeur de chaleur (HX3) pour surchauffer le flux d'hydrogène résiduel, et dans lequel le système est configuré pour diriger le flux d'hydrogène résiduel surchauffé (SRH) vers la chambre de combustion (114).

6. Procédé comprenant les étapes suivantes :
diriger un premier flux d'air comprimé (CA1) et un flux d'hydrogène liquide (LH) vers un premier échangeur de chaleur (HX1) ;
transférer de la chaleur, en utilisant le premier échangeur de chaleur (HX1), entre le premier flux d'air comprimé (CA1) et le flux d'hydrogène liquide (LH) pour produire un flux d'oxygène liquide (LO) et un flux d'hydrogène gazeux (GH) ;
diriger le flux d'oxygène liquide (LO) vers un deuxième échangeur de chaleur (HX2) ;
transférer de la chaleur, en utilisant le deuxième échangeur de chaleur (HX2), au flux d'oxygène liquide (LO) pour produire un flux d'oxygène gazeux (GO) ;
diriger un flux de gaz de combustion (FG) provenant d'une turbine (116) d'une turbine à gaz (110), et le flux d'hydrogène gazeux (GH), vers un troisième échangeur de chaleur (HX3) ;
transférer de la chaleur, à l'aide du troisième échangeur de chaleur (HX3), entre le flux de gaz de combustion (FG) et le flux d'hydrogène gazeux (GH) afin de surchauffer le flux d'hydrogène ; et
diriger le flux d'hydrogène surchauffé (SH) et le flux d'oxygène gazeux (GO) vers une chambre de combustion (114) de la turbine à gaz (110).

7. Procédé selon la revendication 6, dans lequel la température du flux d'hydrogène surchauffé (SH) est comprise entre 400 K et 500 K.

8. Procédé selon la revendication 6 ou la revendication 7, comprenant les étapes suivantes :
diriger un flux de gaz de combustion (FG) provenant de la turbine (116) de la turbine à gaz (110), et le flux d'hydrogène gazeux (GH), vers le troisième échangeur de chaleur (HX3) ;
diriger un flux de gaz de combustion (FG) provenant de la turbine (116) de la turbine à gaz (110) et le flux d'oxygène gazeux (GO) vers un quatrième échangeur de chaleur ;
dans lequel le troisième échangeur de chaleur (HX3) et le quatrième échangeur de chaleur sont disposés de manière à recevoir les flux de gaz de combustion provenant de la turbine en parallèle ;
transférer de la chaleur, à l'aide du troisième échangeur de chaleur (HX3), entre le flux de gaz de combustion et le flux d'hydrogène gazeux afin de surchauffer le flux d'hydrogène ;
transférer de la chaleur, à l'aide du quatrième échangeur de chaleur, entre le flux de gaz de combustion et le flux d'oxygène gazeux afin de surchauffer le flux d'oxygène ; et
diriger le flux d'oxygène surchauffé (SO) et le flux d'hydrogène surchauffé (SH) vers la chambre de combustion (114) de la turbine à gaz (110) ;
ou
diriger un flux de gaz de combustion (FG) provenant de la turbine (116) de la turbine à gaz (110), le flux d'oxyène gazeux (GO), et le flux d'hydrogène gazeux (GH) vers le troisième échangeur de chaleur (HX3) ;
transférer de la chaleur, à l'aide du troisième échangeur de chaleur (HX3), entre le flux de gaz de combustion et à la fois le flux d'hydrogène gazeux et le flux d'oxygène gazeux afin de surchauffer à la fois le flux d'hydrogène et le flux d'oxygène ; et
diriger le flux d'oxygène surchauffé (SO) et le flux d'hydrogène surchauffé (SH) vers la chambre de combustion (114) de la turbine à gaz (110).

9. Procédé selon l'une quelconque des revendications 6 à 8, comprenant les étapes suivantes :
diriger une première partie du flux d'hydrogène gazeux (GH1) entre le premier échangeur de chaleur (HX1) et le troisième échangeur de chaleur (HX3) ou la chambre de combustion (114) ; et
diriger une seconde partie du flux d'hydrogène gazeux (GH2) entre le premier échangeur de chaleur (HX1) et la pile à combustible (102), de préférence par l'intermédiaire du deuxième échangeur de chaleur (HX2).

10. Procédé selon la revendication 9, comprenant les étapes suivantes :
diriger un flux d'hydrogène résiduel (RH) de la pile à combustible (102) vers la chambre de combustion (114) ; ou
diriger un flux d'hydrogène résiduel (RH) de la pile à combustible (102) vers le troisième échangeur de chaleur (HX3) ;
transférer de la chaleur, à l'aide du troisième échangeur de chaleur (HX3), entre le flux de gaz de combustion (FG) et le flux d'hydrogène résiduel (RH) afin de surchauffer le flux d'hydrogène résiduel ; et
diriger le flux d'hydrogène résiduel surchauffé (SRH) vers la chambre de combustion (114).
